# EUROPEAN PATENT SPECIFICATION

(11) **EP 2 806 255 B1**
(45) Date of publication and mention of the grant of the patent: **11.05.2022**
(21) Application number: 14168951.3
(22) Date of filing: 20.05.2014
(51) Int. Cl.: G01L 1/26, G01L 5/28, G01L 5/22

(54) **STRESS DETECTION DEVICE IN A BRAKE TEST BENCH**
SPANNUNGSDETEKTIONSVORRICHTUNG IN EINER BREMSPRÜFBANK
DISPOSITIF DE DÉTECTION DE CONTRAINTE DANS UN BANC D'ESSAI DE FREINAGE

(30) Priority: 21.05.2013 IT VA20130020 U
(43) Date of publication of application: 26.11.2014
(73) Proprietor: Vamag S.r.l., 21012 Cassano Magnago (VA) (IT)
(72) Inventor: CROSTA, Gianfranco, 21012 Cassano Magnago VA (IT)
(74) Representative: Faggioni, Carlo Maria

(56) References cited:
- DE-B1- 2 250 728
- GB-A- 850 711
- US-A1- 2006 248 965

## Description

### Field of the invention

The present invention relates to the field of testbenches for land motorvehicles, in particular stress detection devices in brake testbenches.

### Background art

As known, all wheel-equipped land vehicles undergo efficiency tests of the braking system with a certain frequency. Especially in the course of the vehicle lifetime, during servicing, the need exists to perform some tests relating to the efficiency of the braking system of the vehicle (motorvehicles, lorries, motorbikes, quads, ...), which represents a significant element for the active safety of the vehicle.

These tests are carried out employing suitable testbenches installed on the ground, which are configured and provided with sensors for detecting the dynamic and static forces which act on the wheels during a braking action, so as to derive a series of useful data for understanding the condition of the vehicle. Typically, the testbench comprises fixed floating plates or pairs of rotating rollers - suitably provided with force sensors - on which the vehicle wheels are caused to roll: the test is performed producing the braking action and detecting on the testbench the resulting forces.

During the braking test it is useful to detect also the stress applied by the user on the control member of the braking system (typically the brake pedal in motorvehicles and the brake lever on the handlebar in motorbikes).

For such purpose, stress detection devices are known, provided with load cells suited to detect the pressure being applied on the brake pedal or on the brake lever of the vehicle. The device normally contains a load cell which converts the detected force/pressure into an analogical electric signal, which is sent, through a suitable cable, to a control unit (for example a console containing a personal computer) where this piece of information is suitably processed and integrated with the other signals coming from the testbench, so as to make understandable to the operator the outcome of the test carried out.

It has already been suggested also to transfer via cable these electric signals to an RF transmitter, which is housed onboard the vehicle: thereby, the force signal is transmitted to the console (typically installed in a fixed position in a workshop) via radio frequency.

However, these known systems are not fully satisfactory. The RF transmitter is typically supplied using a connection to the 12V electric socket onboard the vehicle (normally the car cigar charger) and has a certain bulk, which forces the operator to suitably consider how to house onboard the various devices. The presence of the cables, in any case, is a disturbance both during the installation phase of the device, and in the braking phase (the cables may interfere with one's hands or feet during the braking action), it may generate malfunctioning if the cables are not handled with care and the cables are prone to failures due to continuous handling. **<<A>>**

### Summary of the invention

The problem at the base of the invention is hence that of providing a detection device of the stress applied to the brake pedal/lever for a brake testbench, which solves the above-mentioned problems.

Such object is achieved through a device as described, in its essential features, in the main claim here attached. The dependent claims relate to preferred and particularly <<A>>

DE2250728 discloses an example of test-bench.

US2006248965 discloses a force/pressure sensor incorporated in shoes, together with wireless transmission means able to transfer signals of the sensor to a remote apparatus. GB850711 discloses a device for the detection of the control stresses in a brake test bench apparatus for land vehicles, comprising a box body containing a load cell sensor, provided with an outer actuating portion, and means for retaining in position the box body wherein said load cell sensor is installed on a frame which has containment walls which surround said load cell, whereby said box body is defined by said frame and by the relative containment walls and is closed on one side precisely by a head part of load cell sensor, said head part being an outer actuating portion in the shape of a curved plate said load cell sensor is in the form of a T-shaped prismatic body, with said head part defining said outer actuating portion partly protruding from said frame and a trunk part housed within the frame and fastened thereto.
advantageous features of the invention.

In particular, according to a first aspect of the invention, it is supplied a device for the detection of the control stresses in a brake testbench apparatus for land vehicles according to claim 1.

The wireless transmission means can transmit in RF or with the Bluetooth^{®} protocol.

According to the invention, said box body is defined by said frame, provided with perimeter walls, and by the outer actuating portion in the shape of a curved plate. Preferably, said perimeter walls have an inspection door which gives access to an installation compartment of said electric accumulator.

According to the invention, said load cell is designed as a prismatic T-shaped body, having a head part defining said outer actuating portion and a trunk part which may be divided by a thin through-cut into two half-portions joined at one end.

A further aspect provides that said electric accumulator is mounted integral with one of said half-portions of the load cell which extends into said outer actuating portion.

### Brief description of the drawings

Further features and advantages of the invention are in any case more evident from the following detailed description, provided as a non-limiting example and illustrated in the attached drawings, wherein:

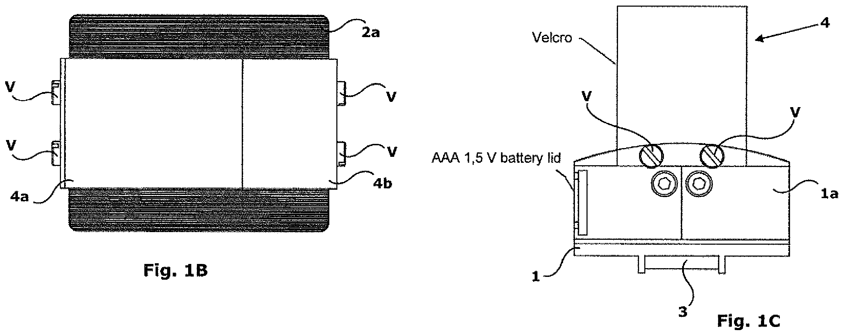

figs. 1A, 1B and 1C are front elevation, top plan and side elevation views, respectively, of the device according to the invention;

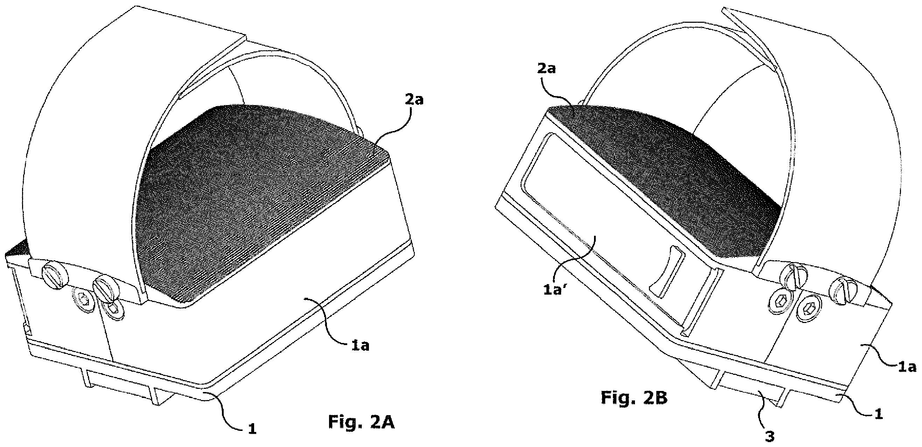

figs. 2A and 2B are views according to two different perspectives of the device according to the invention;
figs. 3A and 3B are section views, taken along the lines A-A and B-B, respectively, of fig. 1 of the device according to the invention;
fig. 3C-3E are further perspective views with parts removed;
fig. 4 is a perspective view, with parts removed, which shows the inner components of the device according to the invention;
fig. 5 is a perspective photographic view of a receiving unit meant to cooperate with the device according to the invention; and
fig. 6 is a perspective view of the device according to the invention applied to a brake lever of a motorbike.

### Detailed description of preferred embodiment

A stress detection device for a brake testbench consists, in a way known per se, of a small frame 1 on which a load cell sensor 2 is installed. Said sensor is generically in the form of a T-shaped prismatic body, with a head part 2a partly protruding from the frame and a trunk part 2b housed within the frame 1 and fastened thereto.

Frame 1 has containment walls 1a which surround the load cell. A box body, defined by frame 1 and by the relative containment walls 1a, is closed on one side (on top in the drawings) precisely by the head portion 2a of load cell 2: head part 2a makes up a curved actuation plate, on which it is provided that a load is imparted (by the user's hand or foot) while the lower part of the frame is kept in opposition to the control member (brake pedal or lever) of the braking system. In order to obtain an effective engagement of frame 1 with the brake pedal/lever, below the frame (that is, on the part opposite actuation plate 2a) a plate/cushion 3 of high-friction material, for example of elastomeric material, is provided.

In order to better constrain the device to the user's hand or foot, a fastening band or strap 4 is furthermore provided, for example consisting of two portions of Velcro^{®} 4a and 4b, fastened to curved plate 3 by screws V (or any other suitable method).

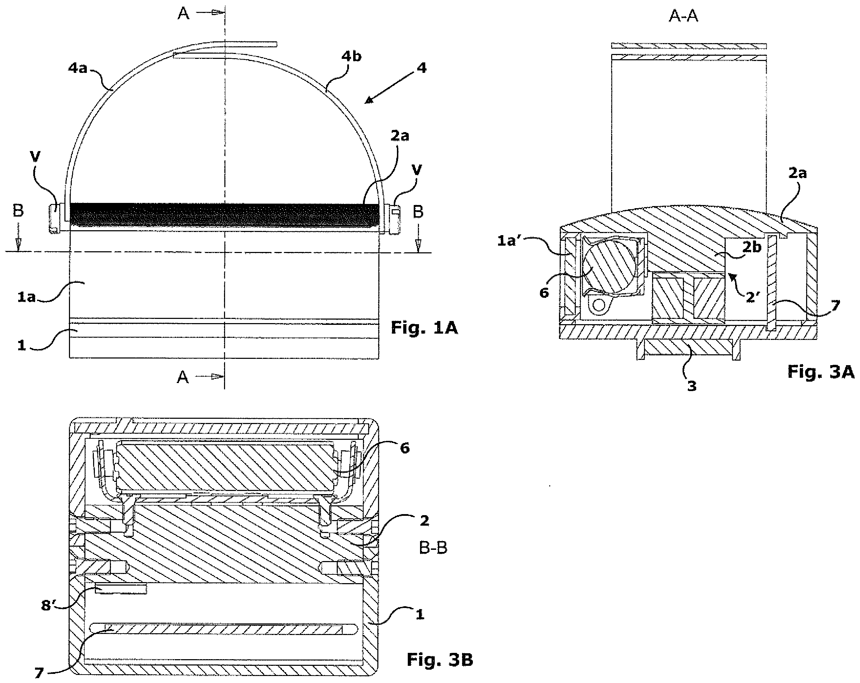

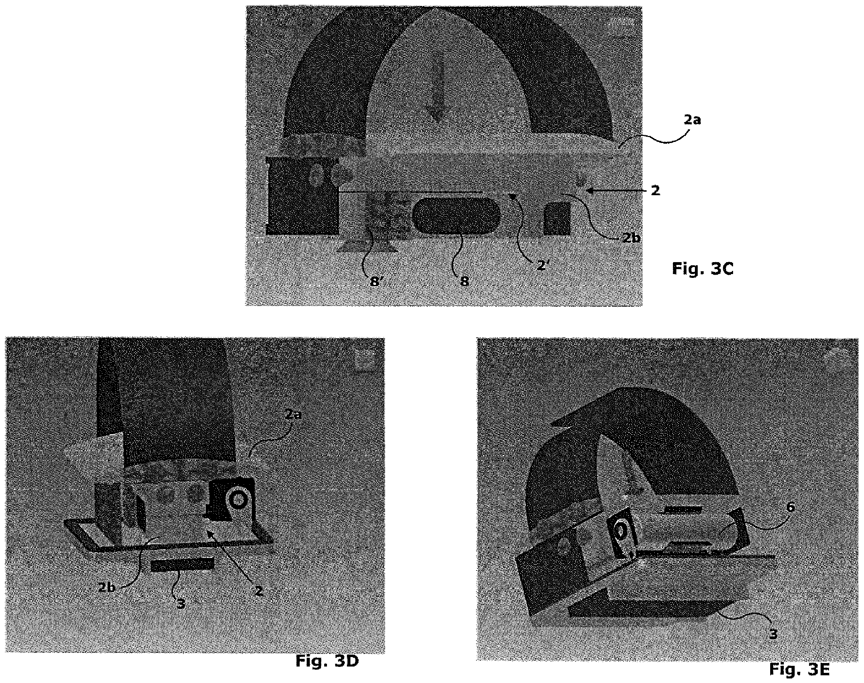

As better visible in figs. 3A and 3C, load cell 2 is designed so that the trunk portion 2b is divided into two half-portions, a top one and a bottom one (with reference to the representation of the drawings), by a thin through-cut 2'. Cut 2' stops in correspondence of a root part of the cell, so as to maintain the integrity of the two half-portions. Slit 2' has the function of amplifying the deformation of the load cell upon the application of a load above curved head 2a: the deformation is detected, in a conventional manner, through a series of strain gauges 8 connected to a circuit plate 8'.

According to the invention, moreover, within the box body defined by the head 2a of load cell 2 and by frame 1, a source of electric supply, such as an electric accumulator 6, and wireless transmission units 7 (RF, Bluetooth^{®}, ...) are also housed.

The electric energy source 6 is in the shape of a docking base for an electric accumulator, such as a standard battery, for example a (possibly rechargeable) AAA-type battery. Access to the battery compartment is allowed by a small cover 1a' provided on the perimeter wall 1a of the device. The docking base is advantageously mounted on the top half-portion of the trunk 2b of the load cell, as visible in figs. 3A and 3B.

Transmission unit 7 comprises an electronic part for the processing of the electric (analogical) signal generated by the load cell, amplified and converted into a digital signal which is sent through a radio transmitter (for example Bluetooth^{®}, WiFi, ZigBee,...). On transmission unit 7 an apparatus for the management of the electric supply is also provided, for the purpose of optimising the draining of energy from electric accumulator 6 and hence for guaranteeing a proper duration of the apparatus operation.

In order to guarantee optimal battery duration, the transmission system (which is the component with the highest energy consumption) is switched on only when measurement detection is actually under way. Two different modes of switching-on of the apparatus are provided: a (possibly capacitive) button actuated as soon as the user's hand/foot touches actuation part 2a, or an automatic activation upon the load cell detecting a force exceeding a preset and settable threshold.

The apparatus automatically switches off when the force measured by the cell drops below a set threshold for a minimum time interval, which is a signal that the device is not being used.

Due to this mounting embedded in a same board 5, load cell 2 and electric supply units 6 as well as wireless transmission units 7 are housed within the box body of device 1, which thus keeps modest dimensions, for example of the order of 60x50x30 mm.

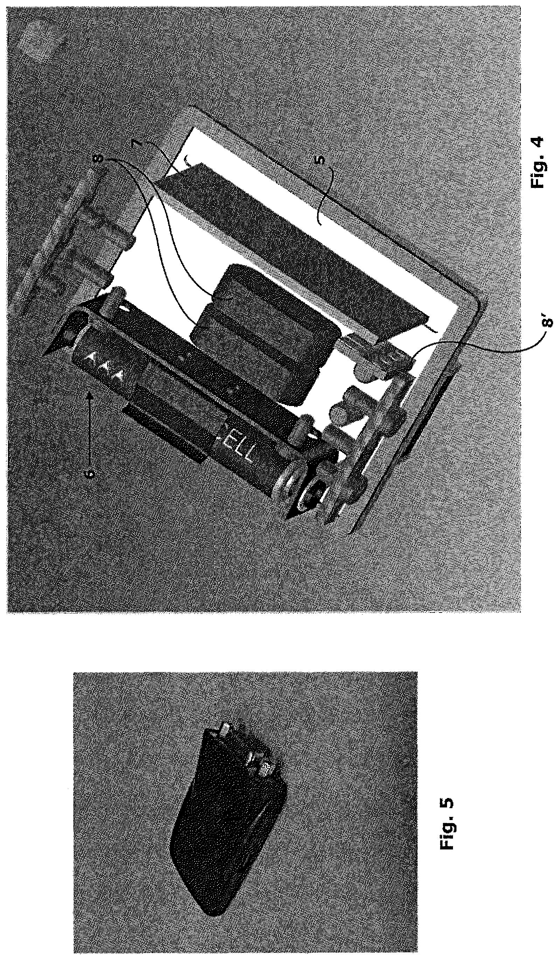

Transmission unit 7 is connected with load cell 2, through circuit plate 8', so as to acquire the signals relating to the detected force and then to transmit them via electromagnetic waves towards a receiver connected to a remote processing console (not shown). A possible receiving unit is illustrated in fig. 5: this version is conceived for exploiting the Bluetooth^{®} communication protocol and interfaces with the console through a serial port, through which it transfers the data coming from transmission unit 7.

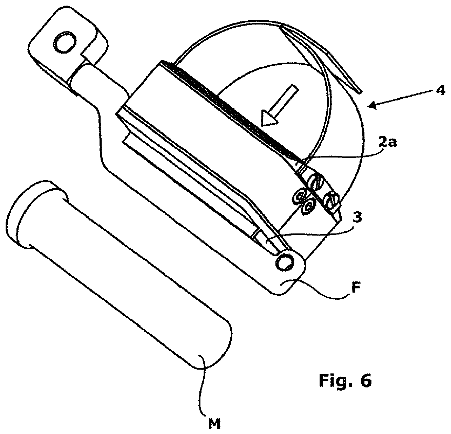

Fig. 6 shows a possible application of the device according to the invention. As can be detected, support cushion 3 is put in contact with a brake lever F of a motorbike. Strap 4 is placed around the user's hand, who then imparts the braking action on lever F pushing on device 1, in particular on the curved plate 2a of the load cell. During the brake test, the user imparts a pulling action on lever F towards the grip M of the motorbike handle, hence causing a force to be applied on the curved plate 2a of detection device 1. The stress hence transfers to the detection area of the strain gauges 8, so as to generate a force signal which is transferred, through transmission unit 7, to the remote processing console.

A similar operation is provided should the device according to the invention be rested on the brake pedal of a motorvehicle and the user's foot be pushed on curved plate 2a and retained there by strap 4.

During the braking process the stresses acting gradually on the pedal/lever are thus detected (the braking force increases in correspondence of the increase of the stress acting on the pedal/lever).

Due to the improved configuration suggested here, the user no longer has to manage connection cables, because both the detection signals of the load cell and the electric supply of the device do not require the presence of cables coming out of the box body. Significant advantages are hence obtained, with respect to the prior art, in terms of handling the device and also of the duration and reliability thereof.

However, it is understood that the protection of the invention described above is not limited to the special configuration illustrated, but extends to any other embodiment falling within the scope of the attached claims.

For example, the geometry and the dimensions of the box body and of the fastening strap may also differ widely from the ones shown. The strap may be conceived for retaining the device to the brake lever/pedal, instead of to the user's hand/foot.

## Claims

1. Device for the detection of the control stresses in a brake testbench apparatus for land vehicles, comprising a box body (1, 1a) containing a load cell sensor (2), provided with an outer actuating portion (2a), and means for retaining in position (4) the box body (1, 1a) wherein
said load cell sensor (2) is installed on a frame (1) which has containment walls (1a) which surround said load cell (2), whereby said box body is defined by said frame (1) and by the relative containment walls (1a) and is closed on one side precisely by a head part (2a) of load cell sensor (2), said head part (2a) being an outer actuating portion in the shape of a curved plate said load cell sensor (2) is in the form of a T-shaped prismatic body, with said head part (2a) defining said outer actuating portion partly protruding from said frame (1) and a trunk part (2b) housed within the frame (1) and fastened thereto,
**characterized in that**
said load cell sensor (2) is connected to a circuit plate (8') for stress detection, to an electric accumulator (6) and to a wireless transmission unit (7), said unit (7) interfacing with said load cell sensor (2) through said circuit plate (8') so as to transmit towards a receiving unit the force signals detected by said load cell sensor (2), and **in that**
said circuit plate (8'), electric accumulator (6) and transmission unit (7) are housed within said box body.

2. Device according to claim 1, wherein said wireless transmission means (7) transmit in RF or with the Bluetooth^{®} protocol.

3. Device according to claim 1 or 2, wherein said perimeter walls (1a) have an inspection door (1a') which gives access to an installation compartment of said electric accumulator (6).

4. Device according to any one of the preceding claims, wherein said trunk part (2a) is divided by a thin through-cut (2') into two half-portions joined at one end.

5. Device according to claim 4, wherein said electric accumulator (6) is mounted integral with one of said two half-portions of the load cell sensor (2) which extends into said outer actuating portion (2a).

## Patentansprüche

1. Vorrichtung zur Erfassung der Steuerbeanspruchungen in einer Bremsprüfstandsvorrichtung für Landfahrzeuge, umfassend einen Gehäusekörper (1, 1a), der einen Lastzellensensor (2) enthält, der mit einem äußeren Betätigungsabschnitt (2a) versehen ist, und mit Mitteln zum Festhalten (4) des Gehäusekörpers (1, 1a) in seiner Position,
wobei der Lastzellensensor (2) auf einem Rahmen (1) installiert ist, der Umfangswände (1a) aufweist, die die Lastzelle (2) umgeben, wobei der Gehäusekörper durch den Rahmen (1) und durch die jeweiligen Umfangswände (1a) definiert ist und auf einer Seite genau durch ein Kopfteil (2a) des Lastzellensensors (2) geschlossen ist, wobei das Kopfteil (2a) ein äußerer Betätigungsabschnitt in der Form einer gekrümmten Platte ist, wobei der Lastzellensensor (2) in der Form eines T-förmigen prismatischen Körpers ist, wobei das Kopfteil (2a) den äußeren Betätigungsabschnitt definiert, der teilweise aus dem Rahmen (1) herausragt, und einen Rumpfteil (2b), der innerhalb des Rahmens (1) untergebracht und daran befestigt ist,
**dadurch gekennzeichnet, dass** der Lastzellensensor (2) mit einer Schaltungsplatte (8') zur Beanspruchungserfassung, mit einem elektrischen Akkumulator (6) und mit einer drahtlosen Übertragungseinheit (7) verbunden ist, wobei die Einheit (7) eine Schnittstelle mit dem Wägezellensensor (2) durch die Schaltungsplatte (8') bildet, um die vom Wägezellensensor (2) erfassten Kraftsignale zu einer Empfangseinheit zu übertragen, und dadurch, dass die Schaltungsplatte (8'), der elektrische Akkumulator (6) und die Übertragungseinheit (7) innerhalb des Gehäusekörpers untergebracht sind.

2. Vorrichtung nach Anspruch 1, wobei die drahtlosen Übertragungsmittel (7) in RF oder mit dem Bluetooth^{®}-Protokoll übertragen.

3. Vorrichtung nach Anspruch 1 oder 2, wobei die Umfangswände (1a) eine Inspektionstür (1a') aufweisen, die Zugang zu einem Installationsfach des elektrischen Akkumulators (6) ermöglicht.

4. Vorrichtung nach einem der vorhergehenden Ansprüche, wobei der Rumpfteil (2a) durch einen dünnen durchgehenden Einschnitt (2') in zwei Halbabschnitte unterteilt ist, die an einem Ende verbunden sind.

5. Vorrichtung nach Anspruch 4, wobei der elektrische Akkumulator (6) integral mit einem der zwei Halbabschnitte des Lastzellensensors (2) montiert ist, der sich in den äußeren Betätigungsabschnitt (2a) erstreckt.

## Revendications

1. Dispositif pour la détection d'efforts de commande dans un appareil de banc d'essai de freinage pour des véhicules terrestres, comprenant un corps de boîte (1, 1a) contenant une cellule de charge (2) prévue avec une partie externe d'actionnement (2a), et des moyens pour retenir en position (4) le corps de boîte (1, la), dans lequel :
ladite cellule de charge (2) est installée sur un bâti (1) qui a des parois de confinement (1a) qui entourent ladite cellule de charge (2), moyennant quoi ledit corps de boîte est défini par ledit bâti (1) et par les parois de confinement (1a) relatives et est fermé d'un côté précisément par une partie de tête (2a) de la cellule de charge (2), ladite partie de tête (2a) étant une partie externe d'actionnement se présentant sous la forme d'une plaque incurvée, ladite cellule de charge (2) se présente sous la forme d'un corps prismatique en forme de T, avec ladite partie de tête (2a) qui définit ladite partie externe d'actionnement faisant partiellement saillie dudit bâti (1) et une partie de tronc (2b) logée dans le bâti (1) et fixée à ce dernier,
**caractérisé en ce que** :
ladite cellule de charge (2) est raccordée à une plaque de circuit (8') pour la détection d'efforts, à un accumulateur électrique (6) et à une unité de transmission sans fil (7), ladite unité (7) s'interfaçant avec ladite cellule de charge (2) par le biais de ladite plaque de circuit (8') afin de transmettre, vers une unité de réception, les signaux de force détectés par ladite cellule de charge (2), et **en ce que** :
ladite plaque de circuit (8'), l'accumulateur électrique (6) et l'unité de transmission (7) sont logés dans ledit corps de boîte.

2. Dispositif selon la revendication 1, dans lequel lesdits moyens de transmission sans fil (7) transmettent en RF ou avec le protocole Bluetooth^{®}.

3. Dispositif selon la revendication 1 ou 2, dans lequel lesdites parois périmétrales (1a) ont une porte d'inspection (1a') qui donne accès à un compartiment d'installation dudit accumulateur électrique (6).

4. Dispositif selon l'une quelconque des revendications précédentes, dans lequel ladite partie de tronc (2a) est divisée par une fine découpe traversante (2') en deux demi-parties assemblées à une extrémité.

5. Dispositif selon la revendication 4, dans lequel ledit accumulateur électrique (6) est monté, de manière solidaire, avec l'une desdites deux demi-parties de la cellule de charge (2) qui s'étend dans ladite partie externe d'actionnement (2a).
